# FASCICULE DE BREVET EUROPEEN

(11) **EP 3 519 230 B1**
(45) Date de publication et mention de la délivrance du brevet: **12.07.2023**
(21) Numéro de dépôt: 17771789.9
(22) Date de dépôt: 28.09.2017
(51) Int. Cl.: B60K 35/00, B60K 37/06, G05G 1/08, G06F 3/038, G06F 3/041, G06F 3/044, G06F 3/0362

(54) **INTERFACE POUR VÉHICULE AUTOMOBILE**
SCHNITTSTELLE FÜR EIN KRAFTFAHRZEUG
INTERFACE FOR A MOTOR VEHICLE

(30) Priorité: 28.09.2016 FR 1659250
(43) Date de publication de la demande: 07.08.2019
(73) Titulaire: DAV, 94046 Créteil Cedex (FR)
(72) Inventeur: AUBRY, Anthony, 94046 Créteil Cedex (FR); VANHELLE, Stéphane, 94046 Créteil Cedex (FR)
(74) Mandataire: Delplanque, Arnaud
(86) Numéro de dépôt international: PCT/EP2017/074719
(87) Numéro de publication internationale: WO 2018/060385

(56) Documents cités:
- WO-A1-2016/135425
- DE-A1-102014 102 227
- FR-A1- 3 033 422
- US-A1- 2006 256 090
- US-A1- 2010 214 257

## Description

La présente invention concerne une interface pour la commande d'au moins une fonction d'un organe de véhicule automobile.

Les interfaces de l'état de la technique sont connues par les documents US2006256090 A1, US2010214257 A1, FR3033422 A1, DE102014102227 A1 et WO2016135425 A1.

Dans le domaine automobile, la commande d'organes électriques, comme le système de climatisation ou de navigation, est généralement réalisée au moyen d'un bouton rotatif mécanique. Celui-ci comporte généralement une molette dont le positionnement angulaire est déterminé par exemple par un capteur optique ou par un commutateur rotatif électrique. La position angulaire de la molette permet à une unité de traitement de sélectionner une commande particulière et de commander par exemple un actionneur de volet dans le système de climatisation ou permet à l'utilisateur d'accéder au clavier de saisie pour entrer une destination dans le système de navigation.

On connait également un système de commande dans lequel on associe une molette rotative à un écran tactile. Dans ce système, une dalle tactile capacitive détecte la position angulaire d'un index métallique porté par la molette. La dalle tactile capacitive permet ainsi d'une part, la saisie tactile d'informations sur la dalle et d'autre part, de détecter la position angulaire de la molette montée rotative sur la dalle. Ce système est intéressant car il permet notamment de programmer l'affichage de l'écran tactile supportant la molette en relation avec différentes fonctions à commander. Par exemple, l'écran peut être programmé pour afficher la position des volets et la température du système de climatisation. Ce même écran avec molette peut également servir à l'affichage du réglage de paramètres du système audio du véhicule.

La rotation de la molette permet notamment à l'utilisateur de faire défiler un élément dans une liste ou d'incrémenter/décrémenter une variable, la sélection ainsi opérée pouvant être affichée sur l'écran. Une fois l'élément sélectionné ou la valeur de la variable modifiée, le choix peut ensuite être validé par contact de l'écran tactile.

Un inconvénient de ce système est qu'il ne permet pas de produire un retour haptique à l'utilisateur, autre qu'un indexage mécanique, lorsqu'il touche la molette.

Un autre inconvénient de ce système est qu'il ne permet pas la validation d'une commande après sa sélection par simple appui sur la molette. Or, le fait d'appuyer sur la molette pour valider une commande est une opération généralement intuitive pour l'utilisateur qui est habituellement associée aux molettes mécaniques de commande.

Un autre inconvénient est que le guidage en rotation induit des frottements qui peuvent être source d'usure, de bruits ou peuvent générer un ressenti de moindre qualité à l'utilisateur.

Un des buts de la présente invention est donc de proposer une interface améliorée qui résolve au moins en partie au moins un de ces inconvénients.

A cet effet, l'invention a pour objet une interface pour la commande d'au moins une fonction d'un organe de véhicule selon la revendication 1 comportant entre autre:
- au moins un organe de commande comprenant :
   o un élément mobile de préhension, mobile en rotation autour d'un axe de rotation,
   o au moins un index métallique porté par l'élément mobile de préhension et mobile avec celui-ci,
   o un guide, l'élément mobile de préhension étant supporté et guidé en rotation par le guide, et
- une dalle tactile capacitive configurée pour détecter la position de l'index métallique, le guide étant fixé sur la dalle tactile capacitive, l'index métallique étant agencé en regard de la dalle tactile capacitive,
caractérisée en ce que le guide comporte un roulement mécanique interposé entre un socle du guide et l'élément mobile de préhension.

Le roulement mécanique permet de limiter les frottements et d'assurer un bon guidage en rotation de l'élément mobile de préhension. La réduction des frottements permet une bonne longévité de l'organe de commande et limite les bruits. Le bon guidage en rotation produit un ressenti de qualité à l'utilisateur, lui permettant une navigation fluide et aisée dans les différents menus.

Le bon guidage en rotation permet aussi d'éviter à l'élément mobile de préhension de se positionner de travers lors de la rotation, ce qui pourrait coincer les index métalliques.

En outre, le roulement mécanique permet de transmettre un effort exercé sur l'organe de commande vers la dalle tactile capacitive pour que celui-ci puisse être détecté par des capteurs d'appui. Egalement, la possibilité de transmettre un effort entre l'organe de commande et la dalle peut permettre qu'un retour haptique généré sur la dalle soit transmis aux doigts de l'utilisateur par l'organe de commande. En effet, le roulement mécanique permet de former une liaison rigide entre l'élément mobile de préhension et le socle collé à la dalle tactile capacitive.

Selon une ou plusieurs caractéristiques de l'interface, prise seule ou en combinaison :
- le roulement mécanique est un roulement à billes, un roulement à cylindre ou un roulement à aiguilles,
- le roulement mécanique comporte un joint d'étanchéité,
- l'interface comporte au moins un capteur d'appui configuré pour mesurer un paramètre représentatif d'une force d'appui exercée sur la dalle tactile capacitive (compris dans l'objet de la revendication 1),
- l'interface comporte une partie fixe et au moins un élément amortisseur agencé entre la partie fixe et une partie mobile de l'interface comprenant la dalle tactile capacitive (compris dans l'objet de la revendication 1),
- le capteur d'appui est un capteur capacitif configuré pour mesurer un déplacement de la partie mobile par rapport à la partie fixe (compris dans l'objet de la revendication 1),
- la dalle tactile capacitive comporte une plaque frontale sur laquelle est fixée le guide de l'organe de commande,
- la dalle tactile capacitive comporte un capteur capacitif fixé sous la plaque frontale, du côté opposé de la plaque frontale fixé au guide,
- l'interface comporte au moins deux capteurs d'appui agencés de part et d'autre du capteur capacitif sous la plaque frontale,
- les capteurs d'appui sont configurés pour mesurer un déplacement d'un support de la partie mobile portant la plaque frontale par rapport à une embase de la partie fixe,
- l'interface comporte un écran d'affichage configuré pour afficher des informations associées à un contact, un déplacement ou un appui de la partie mobile de préhension ou à un contact ou un appui sur la dalle tactile capacitive,
- l'écran d'affichage est fixé à la dalle tactile capacitive,
- la dalle tactile capacitive est au moins partiellement transparente,
- l'interface comporte au moins actionneur vibratoire configuré pour faire vibrer au moins la dalle tactile capacitive en réponse à un contact, un déplacement ou un appui de l'élément mobile de préhension ou à un contact ou un appui sur la dalle tactile capacitive,
- l'organe de commande comporte au moins un organe élastique métallique dont une première extrémité est connectée à une surface métallique externe de l'élément mobile de préhension et une deuxième extrémité est fixée à l'index métallique, l'organe élastique métallique étant configuré pour solliciter l'index métallique contre la dalle tactile capacitive,
- le capteur d'appui est agencé à l'arrière de l'écran d'affichage,
- le capteur d'appui est porté par une carte électronique de l'interface portant également des circuits électroniques de gestion de l'écran d'affichage,
- le support s'étend entre l'écran d'affichage fixé à la dalle tactile capacitive et l'embase portant le capteur d'appui pour qu'un appui sur la dalle tactile capacitive rapproche le capteur d'appui du support,
- le support s'étend entre le capteur d'appui et l'embase, le capteur d'appui étant fixé à l'embase par des plots traversant le support pour qu'un appui sur la dalle tactile capacitive éloigne le capteur d'appui du support,
- l'élément mobile de préhension comporte au moins un guide de lumière présentant une première extrémité située en regard de la dalle tactile capacitive et une deuxième extrémité située à une extrémité de l'élément mobile de préhension opposée à celle située en regard de la dalle tactile capacitive,
- le guide de lumière est configuré pour que ses parois latérales réfléchissent au moins une fois la lumière,
- les parois latérales du guide de lumière sont polies,
- la surface de la deuxième extrémité du guide de lumière est translucide, par exemple dépolie,
- le guide de lumière est réalisé en matériau au moins partiellement transparent et/ou au moins partiellement translucide,
- le guide de lumière est réalisé en matériau plastique,
- le guide de lumière présente au moins une première portion cylindrique,
- la portion cylindrique est surmontée d'une deuxième portion de révolution de forme évasée,
- la première extrémité et/ou la deuxième extrémité du guide de lumière présente une forme annulaire,
- la deuxième extrémité du guide de lumière débouche de l'organe de commande pour être visible par l'utilisateur,
- la deuxième extrémité est agencée en regard d'une zone d'affichage ménagée dans une face frontale opaque de l'organe de commande, la zone d'affichage définissant au moins un pictogramme pouvant être rétroéclairé par la deuxième extrémité du guide de lumière,
- la forme de la deuxième extrémité du guide de lumière présente au moins une portion concave annulaire,
- la surface de la deuxième extrémité du guide de lumière est plus grande que la surface de la première extrémité,
- la hauteur du guide de lumière est au moins deux fois supérieure à la surface de la première extrémité du guide de lumière située face à la dalle tactile capacitive,
- l'élément mobile de préhension comporte une partie périphérique de préhension portant un premier index métallique,
- l'élément mobile de préhension comporte une partie centrale de préhension portant un deuxième index métallique,
- la partie périphérique de préhension et la partie centrale de préhension comportent des corps métalliques formant les surfaces métalliques externes,
- le guide de lumière est interposé entre la partie centrale de préhension et la partie périphérique de préhension,
- le guide de lumière forme un isolant électrique,
- le guide de lumière entoure la partie centrale de préhension,
- l'écran d'affichage est configuré pour émettre de la lumière au niveau de la première extrémité du guide de lumière,
- l'organe de commande comporte au moins un deuxième index métallique pouvant être détecté par la dalle tactile capacitive,
- le deuxième index métallique est porté par l'élément mobile de préhension et connecté à une deuxième surface métallique externe de l'élément mobile de préhension,
- un premier index métallique est excentré par rapport à l'axe de rotation de manière à détecter une position angulaire de l'élément mobile de préhension,
- le deuxième index métallique et/ou la deuxième surface métallique de préhension est agencé dans l'axe de rotation pour détecter un contact central de l'élément mobile de préhension,
- l'élément mobile de préhension comporte une partie périphérique de préhension portant le premier index métallique et la première surface métallique externe,
- l'élément mobile de préhension comporte une partie centrale de préhension portant le deuxième index métallique et la deuxième surface métallique externe,
- l'élément mobile de préhension comporte un isolant électrique interposé entre la partie centrale de préhension et la partie périphérique de préhension,
- l'isolant électrique entoure la partie centrale de préhension,
- l'isolant électrique est au moins partiellement transparent et/ou au moins partiellement translucide,
- l'isolant électrique présente une première extrémité située en regard de la dalle tactile capacitive et une deuxième extrémité située à une extrémité de l'élément mobile de préhension opposée à celle située en regard de la dalle tactile capacitive.

D'autres caractéristiques et avantages de l'invention ressortiront de la description suivante, donnée à titre d'exemple et sans caractère limitatif, en regard des dessins annexés sur lesquels :
- la figure 1 représente une vue d'une portion de l'habitacle intérieur d'un véhicule automobile comprenant une interface qui est installée à titre d'exemple au niveau du panneau avant du véhicule,
- la figure 2 montre une vue de face de l'interface de la figure 1,
- la figure 3 montre une vue en coupe A-A de l'interface de la figure 2,
- la figure 4 montre une vue éclatée d'un organe de commande de l'interface de la figure 3,
- la figure 5 montre un organigramme d'un procédé de commande d'au moins une fonction d'un organe de véhicule automobile au moyen de l'interface des figures 2 et 3,
- la figure 6 est une vue schématique d'une première configuration de l'interface,
- la figure 7 est une vue schématique d'une deuxième configuration de l'interface,
- la figure 8 est une vue schématique d'une troisième configuration de l'interface,
- la figure 9 est une vue schématique d'une quatrième configuration de l'interface, et
- la figure 10 est une vue schématique d'un autre exemple d'interface.

Sur ces figures, les éléments identiques portent les mêmes numéros de référence.

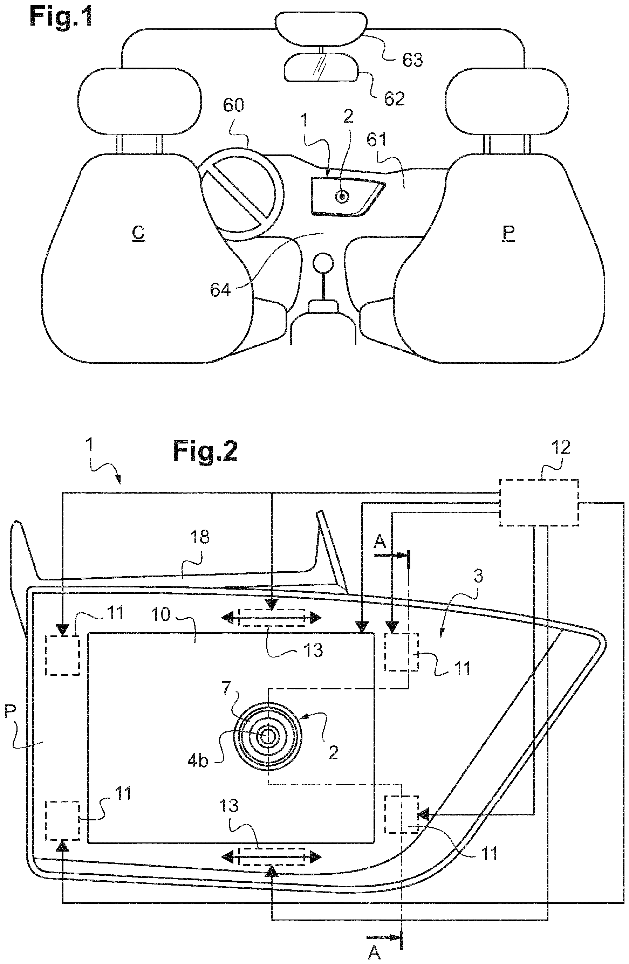

La figure 1 montre des éléments d'une partie avant d'habitacle de véhicule automobile.

L'habitacle comprend notamment un siège conducteur noté -C- disposé derrière un volant 60 et un panneau avant 61 (aussi appelé planche de bord), un siège passager noté -P-, un rétroviseur intérieur 62, un module de plafonnier 63 aussi appelé dôme placé à proximité du rétroviseur intérieur 62 dans la partie centrale haute de la partie avant de l'habitacle et une console centrale 64 située entre les deux sièges C, P de la partie avant de l'habitacle 10.

L'habitacle comporte une interface 1 notamment propre à être logée dans le panneau avant 61 du véhicule. Bien entendu, l'interface 1 peut également être disposée à d'autres endroits de l'habitacle comme par exemple au niveau de la console centrale 64 ou tout autre endroit adapté.

Une telle interface 1 permet la commande d'au moins une fonction d'un organe de véhicule automobile telle que la commande des fonctions d'un système de climatisation, d'un système audio, d'un système de téléphonie ou encore d'un système de navigation. Cette interface 1 peut également servir pour les commandes de lèvevitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

L'interface 1 permet par exemple à l'utilisateur une sélection par défilement dans une liste ou une modification d'une valeur de paramètre ou une validation d'une sélection. Elle permet par exemple à l'utilisateur de sélectionner une adresse postale de destination ou un nom dans un répertoire, les réglages du système de climatisation ou la sélection d'une piste musicale dans une liste.

L'interface 1 comporte au moins un organe de commande 2 et une dalle tactile capacitive 3.

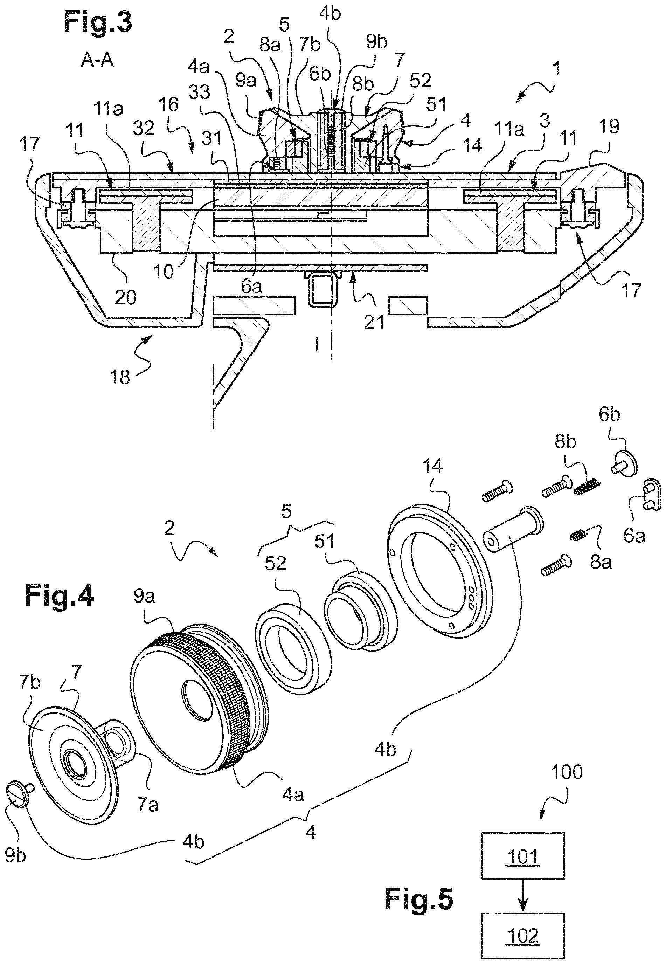

Les figures 2 et 3 montrent une vue plus détaillée de l'interface 1, la figure 3 représentant l'interface 1 de la figure 2 en coupe A-A.

La dalle tactile capacitive 3 comprend au moins un capteur capacitif 31 et une plaque frontale 32 agencée sur le capteur capacitif 31. Le capteur capacitif 31 est fixé à la plaque frontale 32 par exemple par une colle optique (appelée « optical bounding » en anglais).

Le capteur capacitif 31 permet de détecter une variation de capacité au niveau de la surface de la plaque frontale 32. Le capteur capacitif 31 peut par exemple détecter un contact d'un doigt d'un utilisateur. Le capteur capacitif 31 permet également de déterminer les coordonnées spatiales du doigt sur la surface de la dalle 3. Le capteur capacitif 31 est par exemple formé d'un réseau d'électrodes s'étendant sur tout ou partie de la surface arrière de la plaque frontale 32. Les électrodes sont par exemple réalisées en ITO (oxyde indium - étain) qui permettent au capteur 31 d'être transparent.

La rigidité de la dalle tactile capacitive 3 est obtenue au moyen de la plaque frontale 32 (ou plaque de contact) rigide, telle qu'une plaque de verre ou de plastique. La plaque frontale 32 agencée sur le capteur capacitif 31 fait face à l'utilisateur une fois montée dans l'habitacle. La surface tactile de la dalle 3 est ainsi formée par la surface de la plaque frontale 32 qui peut être plane ou courbe.

La plaque frontale 32 peut être au moins partiellement transparente et/ou au moins partiellement opaque de manière à cacher les éléments disposés derrière.

La plaque frontale 32 peut être entièrement opaque, la dalle tactile capacitive 3 formant un pavé tactile ou « Touchpad » en anglais. Une telle interface 1 ayant un organe de commande 2 collé sur la dalle tactile capacitive 3 est compacte. En effet, une telle interface 1 regroupe deux éléments manipulables par l'utilisateur dans un même emplacement de l'habitacle sans nécessiter d'emplacement dédié pour la fixation de l'organe de commande 2. Cela permet aussi d'avoir une interface 1 reconfigurable. La saisie de caractères est fastidieuse avec une molette, voire impossible pour les caractères asiatiques. L'organe de commande 2 collé sur une dalle 3 permet d'obtenir dans un espace réduit une interface 1 multifonctions capable de réaliser une reconnaissance aisée des caractères grâce à la dalle, associée au confort de préhension d'un organe de commande 2.

Un écran d'affichage 10, tel qu'un écran TFT (« Thin-Film transistor » en anglais) ou un écran LED ou un écran LCD peut être configuré pour afficher des informations associées à la manipulation de l'interface 1. L'écran 10 peut être disposé sous le capteur capacitif 31 de manière à former un écran tactile (« touchscreen » en anglais). L'écran d'affichage 10 peut être fixé au capteur capacitif 31 par une colle optique 33 (appelé « optical bounding » en anglais). Le capteur capacitif 31, la colle optique 33 et la plaque frontale 32 sont alors au moins partiellement transparents pour permettre la visualisation des images affichées au travers par l'écran 10.

L'interface 1 peut comporter une carte électronique 21 portant des circuits électroniques de gestion de l'écran d'affichage 10.

L'écran d'affichage 10 peut aussi être déporté de la dalle tactile capacitive 3. La plaque frontale 32 est alors opaque. L'écran d'affichage 10 déporté peut être reçu dans le panneau avant 61 ou peut être projeté dans le champ de vision du conducteur par un afficheur tête haute, également connu sous le nom de HUD (pour « Head-Up Display » en anglais).

La dalle tactile capacitive 3 et l'écran d'affichage 10 sont par exemple des éléments d'une partie mobile 16 de l'interface 1 qui est reliée par au moins un élément amortisseur 17 à une partie fixe 18 destinée à être fixée au véhicule automobile. L'élément amortisseur 17 comporte au moins un élément élastique, tel qu'un plot élastique, silicone ou caoutchouc. L'élément amortisseur 17 comporte par exemple au moins quatre silentblock ^{®} comprenant des éléments élastiques et des vis de fixation pour relier la partie mobile 16 à la partie fixe 18.

L'interface 1 peut comporter un capteur d'appui 11 configuré pour mesurer un paramètre représentatif d'une force d'appui exercée sur la dalle tactile capacitive 3.

L'interface 1 comporte par exemple autant de capteurs d'appui 11 que d'éléments amortisseurs 17, par exemple quatre capteurs d'appui 11, agencés à proximité d'un élément amortisseur 17 respectif. Un capteur 11 est par exemple agencé à proximité de chaque coin de l'écran d'affichage 10 (figure 2).

Le capteur d'appui 11 est par exemple un capteur capacitif configuré pour mesurer une distance entre la partie mobile 16 et la partie fixe 18 dans une direction perpendiculaire à la surface de la dalle 3. Une variation de distance entre la partie mobile 16 et la partie fixe 18 est représentatif d'un déplacement de la partie mobile 16 par rapport à la partie fixe 18 dû à un appui sur la dalle 3.

Pour cela, le capteur d'appui 11 comporte une électrode, par exemple portée par une carte électronique additionnelle 11a, agencée en regard d'une surface métallique, l'un étant porté par la partie mobile 16, l'autre étant porté par la partie fixe 18. La mesure de la force d'appui peut alors être obtenue à partir d'une mesure capacitive du faible déplacement de la dalle 3 (non perceptible) résultant d'un appui exercé sur la dalle 3.

La partie mobile 16 comporte par exemple un support 19 auquel est fixée la dalle tactile capacitive 3 et le au moins un élément amortisseur 17. Plus précisément, le capteur capacitif 31 de la dalle 3 est fixé à l'arrière de la plaque frontale 32, un guide 5 de l'organe de commande 2 étant fixé en face avant. On prévoit en outre que la dimension de la surface de la plaque frontale 32 soit supérieure à celle du capteur capacitif 31. Le support 19, par exemple en forme de cadre, est fixé au niveau de la surface laissée libre de la plaque frontale 32, à l'arrière de cette dernière, autour du capteur capacitif 31 de la dalle 3.

Selon un premier exemple de réalisation représenté sur la figure 3, l'interface 1 comporte au moins deux capteurs d'appui 11, par exemple quatre, agencés de part et d'autre du capteur capacitif 31, et ici de l'écran d'affichage 10. Les capteurs d'appui 11 sont configurés pour mesurer un déplacement du support 19 par rapport à une embase 20 de la partie fixe 18. Le support 19 est par exemple métallique ou présente un revêtement métallique en face arrière, au moins en face de l'électrode du capteur d'appui 11 porté par une carte électronique additionnelle 11a fixée à l'embase 20. Ces surfaces métalliques peuvent être détectées par l'électrode du capteur d'appui 11. Les capteurs d'appui 11 sont ainsi agencés en regard du support 19, lui-même fixé à une portion P de la plaque frontale 32 qui est opaque (figure 2), ils ne sont donc pas visibles par l'utilisateur.

Les capteurs d'appui 11 agencés à proximité des éléments amortisseurs 17 sont disposés à l'emplacement où le déplacement de la partie mobile 16 est le plus important.

En fonctionnement, lorsque l'utilisateur appuie sur la plaque frontale 32 ou sur l'organe de commande 2, le capteur d'appui 11 détecte le déplacement de la dalle tactile capacitive 3 vers la partie fixe 18, représentatif d'une force d'appui.

La mesure de la force d'appui peut aussi être réalisée par d'autres moyens comme par mesure inductive ou par mesure ultrason ou par mesure de déformation au moyen de jauges de contrainte ou de capteurs FSR (pour « Force Sensing Résister » en anglais).

Une unité de traitement 12 peut être reliée aux capteurs d'appui 11 et au capteur capacitif 31 (figure 2). L'unité de traitement 12 comporte un ou plusieurs microcontrôleurs ou ordinateurs, ayant des mémoires et programmes adaptés pour modifier l'affichage de l'écran 10, pour recevoir les informations de position détectées par la dalle tactile capacitive 3 et pour recevoir les signaux de mesure des capteurs 11. C'est par exemple l'ordinateur de bord du véhicule automobile. L'unité de traitement 12 peut être configurée pour évaluer une force d'appui à partir des capteurs d'appui 11 notamment en additionnant les forces mesurées par chaque capteur 11.

Un exemple d'organe de commande 2 est également visible sur la vue en coupe de la figure 3 et sur la vue éclatée de la figure 4.

On voit sur ces figures que l'organe de commande 2 comporte un élément mobile de préhension 4, au moins un index métallique 6a, 6b porté par l'élément mobile de préhension 4 et mobile avec celui-ci et un guide 5, l'élément mobile de préhension 4 étant supporté et guidé en déplacement par le guide 5.

Le guide 5 est fixé sur la plaque frontale 32 de la dalle tactile capacitive 3, par exemple par collage. Le guide 5 est par exemple fixé au centre de la dalle tactile capacitive 3 (figure 1) ou dans un coin ou côté de la dalle tactile capacitive 3.

L'organe de commande 2 est un bouton rotatif, l'élément mobile de préhension 4 étant mobile en rotation autour d'un axe de rotation I perpendiculaire à la surface de la dalle tactile capacitive 3. L'élément mobile de préhension 4 rotatif est supporté et guidé en rotation par le guide 5 formant un palier. L'élément mobile de préhension 4 et le guide 5 présentent par exemple des formes générales cylindriques coaxiales.

Le guide 5 comporte un socle 51 fixé à la dalle tactile capacitive 3 et un roulement mécanique 52, tel qu'un roulement à billes ou un roulement à cylindres ou un roulement à aiguilles, monté sur le socle 51, le roulement mécanique 52 étant interposé entre le socle 51 et l'élément mobile de préhension 4.

Le roulement mécanique 52 permet de limiter les frottements et d'assurer un bon guidage en rotation de l'élément mobile de préhension 4. La réduction des frottements permet une bonne longévité de l'organe de commande 2 et limite les bruits. Le bon guidage en rotation produit un ressenti de qualité à l'utilisateur, lui permettant une navigation fluide et aisée dans les différents menus proposés.

Le bon guidage en rotation permet aussi d'éviter à l'élément mobile de préhension 4 de se positionner de travers lors de la rotation, ce qui pourrait coincer les index métalliques 6a, 6b.

En outre, le roulement mécanique 52 permet de transmettre un effort exercé sur l'organe de commande 2 vers la dalle tactile capacitive 3 pour que celui-ci puisse être détecté par les capteurs d'appui 11. Egalement, la possibilité de transmettre un effort entre l'organe de commande 2 et la dalle 3 permet qu'un retour haptique généré sur la dalle 3 soit transmis aux doigts de l'utilisateur par l'organe de commande 2. En effet, le roulement mécanique 52 permet de former une liaison rigide entre l'élément mobile de préhension 4 et le socle 51 collé à la dalle tactile capacitive 3.

Le roulement mécanique 52 peut comporter un joint d'étanchéité permettant notamment d'améliorer la manoeuvrabilité de l'organe de commande 2.

L'extrémité de l'élément mobile de préhension 4 en regard de la dalle tactile capacitive 3 porte au moins un index métallique 6a, 6b qui est ainsi agencé en vis-à-vis de la dalle tactile capacitive 3. Il s'agit par exemple d'une languette métallique, par exemple en Cuivre.

L'index métallique 6a, 6b est électriquement connecté à une surface métallique externe 9a, 9b de l'élément mobile de préhension 4 destinée à être manipulée par l'utilisateur. La surface métallique externe 9a, 9b recouvre au moins en partie la surface externe de l'élément mobile de préhension 4.

Pour cela, l'élément mobile de préhension 4 est par exemple au moins en partie réalisé en matériau métallique.

Selon un autre exemple, l'élément mobile de préhension 4 comporte un revêtement agencé au niveau de la surface externe de préhension, tel qu'une enveloppe chromée connectée à l'index métallique 6a, 6b.

En touchant la surface métallique externe 9a, 9b électriquement connectée à l'index métallique 6a, 6b, l'utilisateur amène des charges électriques en regard de la dalle tactile capacitive 3 qui sont alors détectées par le capteur capacitif 31. La détection de ces charges dans la zone de l'organe de commande 2 permet d'en déduire le contact de l'organe de commande 2 par l'utilisateur. La détermination des coordonnées de l'index métallique 6b par la dalle tactile capacitive 3 permet également de déterminer la position angulaire de l'index métallique 6b mobile au-dessus de la dalle tactile capacitive 3.

L'interface 1 est en outre configurée pour commander la mise en oeuvre d'un procédé de commande 100 d'au moins une fonction d'un organe de véhicule automobile (figure 5).

Au cours de ce procédé de commande 100, on commande par exemple au moins une fonction de l'interface 1 lorsqu'une force d'appui exercée sur la dalle tactile capacitive 3 est supérieure à un seuil.

Par exemple, on éclaire l'écran d'affichage 10 et/ou on rétroéclaire l'organe de commande 2 lorsqu'une force d'appui exercée sur la dalle tactile capacitive 3 est supérieure à un seuil de réveil, par exemple lorsque la force d'appui est supérieure à 0,1N, telle que comprise entre 0,1 et 0,15N. En effet, la détection d'un appui sur l'organe de commande 2 par les capteurs d'appui 11 peut être plus rapide que la détection par la dalle tactile capacitive 3 d'un contact de l'organe de commande 2, du fait du temps nécessaire pour le transport des charges de la surface métallique externe à l'index métallique 6a, 6b. La détection d'un appui par les capteurs d'appui 11, antérieure à la détection d'un contact par la dalle 3, peut donc permettre le « réveil » de l'interface 1, en allumant l'écran 10 ou en rétroéclairant l'organe de commande 2.

On commande par exemple une fonction de l'interface 1, telle qu'une validation d'une sélection, lorsqu'une force d'appui exercée sur la dalle tactile capacitive 3 est supérieure à un seuil d'appui, par exemple lorsque la force d'appui est supérieure à 3N.

La fonction de l'interface 1 peut être commandée relativement à l'intensité de la force d'appui exercée sur la dalle tactile capacitive 3. Par exemple, la fonction est un agrandissement de l'image affichée sur l'écran 10 et l'agrandissement est proportionnel à l'intensité de la force d'appui exercée sur la dalle 3.

On peut en outre commander au moins une fonction de l'interface 1 lorsque la dalle tactile capacitive 3 détecte un contact de l'organe de commande 2 et lorsqu'une force d'appui supérieure à un seuil d'appui est exercée sur la dalle tactile capacitive 3.

La mesure d'une force d'appui supérieure au seuil d'appui peut permettre de confirmer la détection d'un contact de l'organe de commande 2 par la dalle tactile capacitive 3 du fait de la redondance de l'information.

La détection d'un contact de l'élément mobile de préhension 4 et la mesure d'un appui sur l'organe de commande 2 supérieure à un seuil d'appui peuvent notamment permettre la validation d'une fonction, telle qu'une fonction du système de climatisation, de navigation, de l'autoradio ou la validation d'une sélection d'un choix parmi une liste, telle qu'une liste téléphonique. Il est notamment ainsi possible d'exécuter une fonction, comme une validation d'une sélection, par simple appui sur l'organe de commande 2.

L'interface 1 peut aussi comporter au moins un actionneur vibratoire 13 configuré pour faire vibrer au moins la dalle tactile capacitive 3 en réponse à un contact, un déplacement ou un appui de l'élément mobile de préhension 4 ou à un contact ou un appui exercé sur la dalle tactile capacitive 3. L'interface 1 comporte par exemple deux actionneurs vibratoires 13 par exemple fixés au support 19 de la plaque frontale 32 de la dalle tactile capacitive 3 (figure 2).

Les actionneurs vibratoires 13 peuvent être agencés de part et d'autre de l'écran 10, tel qu'à droite et à gauche ou tel qu'en haut et en bas de l'écran 10 en référence à la position verticale de l'interface 1 montée dans le véhicule (figure 1).

Les actionneurs vibratoires 13 peuvent être montés de manière à diriger la vibration dans le plan de l'écran 10 ou orthogonalement au plan de l'écran 10, ou encore dirigée selon une combinaison de ces directions.

La possibilité de faire vibrer la dalle 3 permet de faire vibrer l'organe de commande 2 fixé sur la dalle 3. En effet, le retour haptique ne se fait pas uniquement sur la dalle tactile capacitive 3 mais il est également transmis à la main de l'utilisateur à travers l'organe de commande 2 fixé sur la dalle 3. Cela est possible du fait de la bonne transmission des forces entre l'organe de commande 2 et l'actionneur 13 qui est obtenue notamment par fixation du guide 5 par collage sur la dalle 3 et par l'emploi d'un roulement mécanique 52.

Ce retour haptique peut par exemple permettre d'indexer les positions angulaires de l'élément mobile de préhension 4.

Au moins un paramètre de la vibration générée peut être contrôlé relativement à l'intensité de l'effort d'appui exercé sur la dalle tactile capacitive 3.

On peut aussi faire vibrer la partie mobile 16, c'est-à-dire la dalle tactile capacitive 3 ou la dalle tactile capacitive 3 et l'écran 10, lorsqu'on mesure une force d'appui exercée sur la dalle tactile capacitive 3 supérieure à un seuil.

La mesure de la force d'appui exercée sur la dalle tactile capacitive 3 peut également permettre de contrôler au moins un paramètre de la vibration générée, relativement à l'intensité de l'effort d'appui exercé sur la dalle tactile capacitive 3. Le paramètre de la vibration peut être l'allure du signal d'alimentation de l'actionneur 13, l'amplitude, la durée ou la fréquence de la vibration.

Cette dépendance est par exemple une relation proportionnelle ou une loi mathématique ou peut être prédéfinie dans un tableau de correspondance préalablement stocké en mémoire.

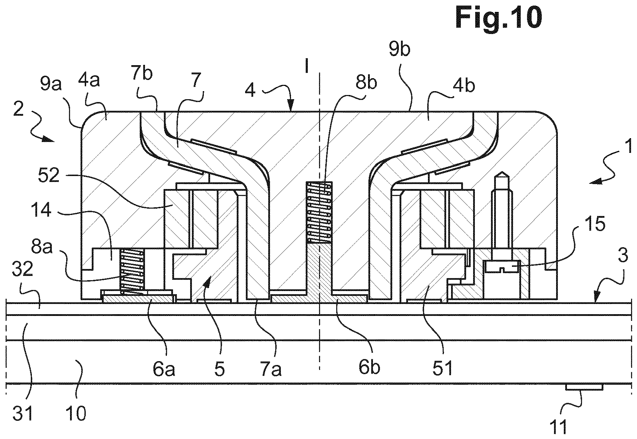

Selon un exemple de réalisation particulier visible sur les figures 3 et 4, ainsi que sur la variante d'interface 1 représentée en figure 10, l'organe de commande 2 comporte au moins un organe élastique métallique 8a, 8b, tel qu'un ressort hélicoïdal de compression.

Une première extrémité de l'organe élastique métallique 8a, 8b est connectée à une surface métallique externe 9a de l'élément mobile de préhension 4 et une deuxième extrémité est fixée à l'index métallique 6a, 6b.

L'organe élastique métallique 8a, 8b est configuré pour solliciter l'index métallique 6a, 6b contre la dalle tactile capacitive 3.

En sollicitant l'index métallique 6a, 6b contre la dalle tactile capacitive 3, on s'assure d'un contact entre l'index métallique 6a, 6b et la dalle 3. L'index métallique 6a, 6b peut ainsi être vu par la dalle 3, indépendamment des tolérances de fabrication ou de la non-planéité d'une plaque frontale 32 courbe par exemple et donc de l'interstice pouvant exister entre la dalle et l'index. En outre, l'organe élastique métallique 8a, 8b est conducteur, ce qui permet d'assurer le transfert de charge entre l'index métallique 6a, 6b et la surface métallique externe de l'élément mobile de préhension 4.

Selon un exemple de réalisation particulier visible sur les figures 3 et 4, ainsi que sur la variante d'interface 1 représentée en figure 10, l'organe de commande 2 comporte au moins un premier index métallique 6a et au moins un deuxième index métallique 6b. Le premier index métallique 6a est connecté à une première surface métallique externe 9a de l'élément mobile de préhension 4. Le deuxième index métallique 6b est connecté à une deuxième surface métallique externe 9b de l'élément mobile de préhension 4. La première surface métallique externe 9a et la deuxième surface métallique externe 9b ne sont pas connectées électriquement.

On peut ainsi commander au moins :
- une première fonction de l'interface 1 lorsque la dalle tactile capacitive 3 détecte un premier index métallique 6a, et
- une deuxième fonction de l'interface 1 lorsque la dalle tactile capacitive 3 détecte un deuxième index métallique 6b.

On peut également mesurer une force d'appui exercée sur la dalle tactile capacitive 3 au moyen de capteur d'appui 11, au moins un seuil de détection de force d'appui étant associé à la détection d'un index métallique 6a, 6b.

Par exemple, un premier seuil de détection de force d'appui est associé à la détection du premier index métallique 6a et un deuxième seuil de détection de force d'appui est associé à la détection du deuxième index métallique 6b.

Le premier seuil et le deuxième seuil de détection peuvent être distincts ou égaux.

Dans le cas d'un élément mobile de préhension 4 rotatif, le premier index métallique 6a est par exemple excentré par rapport à l'axe de rotation I de manière à détecter une position angulaire de l'élément mobile de préhension 4 lorsqu'il est touché par l'utilisateur.

Selon un exemple de réalisation, le deuxième index métallique 6b et/ou la deuxième surface métallique de préhension 9b est agencé dans l'axe de rotation I pour détecter un contact central de l'élément mobile de préhension 4.

On obtient ainsi un organe de commande 2 présentant deux zones distinctes de contact avec un design compact.

Selon un autre exemple, le deuxième index métallique 6b et/ou la deuxième surface métallique de préhension 9b est excentré par rapport à l'axe de rotation I. L'information d'une détection du deuxième index métallique 6b peut ensuite être traitée comme un contact distinct de celui détecté par le premier index métallique 6a définissant une position angulaire.

Selon un exemple de réalisation, l'élément mobile de préhension 4 comporte :
- une partie périphérique de préhension 4a portant le premier index métallique 6a et la première surface métallique externe 9a, et
- une partie centrale de préhension 4b portant le deuxième index métallique 6b et la deuxième surface métallique externe 9b.

La partie périphérique de préhension 4a présente par exemple une forme générale de bague. La partie centrale de préhension 4b, désassemblée en deux parties sur l'exemple de la figure 5, présente par exemple une forme générale cylindrique, coaxiale à la bague.

Selon une variante de réalisation représentée sur la figure 10, la partie centrale de préhension 4b présente une forme évasée du côté de l'extrémité visible par l'utilisateur.

Les surfaces métalliques externes 9a, 9b peuvent être connectées à un index métallique 6a, 6b respectif par des fils électriques ou des tiges métalliques (non représenté).

Selon un autre exemple, la partie périphérique de préhension 4a et la partie centrale de préhension 4b comportent des corps métalliques formant les surfaces métalliques externes 9a, 9b.

Les organes élastiques métalliques 8a, 8b fixés d'une part à un index métallique 6a, 6b respectif, peuvent être fixés d'autre part, à un corps métallique respectif des parties périphérique et centrale de préhension 4a, 4b pour être connectées à une surface métallique externe 9a, 9b respective.

On peut prévoir que l'élément mobile de préhension 4 comporte en outre une couronne 14 de matériau isolant, tel qu'en plastique, interposée entre l'extrémité du corps métallique de la partie périphérique de préhension 4a et l'index métallique 6a (figures 3 et 10). La couronne 14 peut être fixée à l'extrémité du corps métallique, par exemple au moyen de vis de fixation 15. La couronne 14 de matériau isolant permet d'éviter que le corps métallique soit détecté par la dalle tactile capacitive 3 et fausse les mesures.

L'élément mobile de préhension 4 peut comporter un isolant électrique 7 interposé entre la partie centrale de préhension 4a et la partie périphérique de préhension 4b. L'isolant électrique 7 permet d'isoler les index métalliques 6a, 6b l'un de l'autre notamment pour une partie périphérique et centrale de préhension 4a, 4b comportant des corps métalliques. Cela permet de séparer la détection d'un contact sur la partie périphérique de préhension 4b d'un contact sur la partie centrale de préhension 4b.

Les parties périphérique et centrale de préhension 4a, 4b et l'isolant électrique 7 peuvent présenter des formes complémentaires. Les parties périphérique et centrale de préhension 4a, 4b sont fixées à l'isolant électrique 7, par exemple par collage. La partie périphérique de préhension 4a, la partie centrale de préhension 4b et l'isolant électrique 7 de l'élément mobile de préhension 4 sont solidaires en rotation.

L'isolant électrique 7 peut entourer la partie centrale de préhension 4a, notamment sur la hauteur de l'organe de commande 2. Plus précisément, l'isolant électrique 7 présente par exemple une première portion cylindrique, notamment de même hauteur que le socle 51, surmontée d'une deuxième portion de révolution de forme évasée. La portion cylindrique de l'isolant électrique 7 traverse le socle 51 du guide 5. Les extrémités 7a, 7b de l'isolant électrique 7 peuvent présenter des formes respectives d'anneaux.

On peut ainsi associer une fonction distincte selon que l'utilisateur touche ou appuie sur la périphérie ou sur le sommet de l'organe de commande 2.

La rotation de la partie périphérique de préhension 4a peut permettre la sélection d'une fonction et un appui ou contact successif de la partie périphérique de préhension 4a ou de la partie centrale de préhension 4b peut permettre la validation de la sélection réalisée.

Un appui ou contact de la partie centrale de préhension 4b peut permettre une validation sans rotation de sélection préalable.

Deux seuils de détection distincts peuvent être prévus selon que l'utilisateur appuie sur la partie périphérique de préhension 4a ou sur la partie centrale de préhension 4b. Par exemple, le seuil de détection de la partie périphérique de préhension 4a est supérieur au seuil de détection de la partie centrale de préhension 4b. Un seuil de détection plus élevé en partie périphérique permet d'éviter de déclencher une commande lorsque l'utilisateur manipule la partie périphérique de préhension 4a en rotation pour sélectionner une commande par exemple.

L'élément mobile de préhension 4 peut comporter au moins un guide de lumière 7.

Le guide de lumière 7 présente une première extrémité 7a située en regard de la dalle tactile capacitive 3 et une deuxième extrémité 7b située à une extrémité de l'élément mobile de préhension 4 opposée à celle située en regard de la dalle tactile capacitive 3.

Dans le cas où la dalle tactile capacitive 3 est au moins partiellement transparente et l'interface 1 comporte un écran d'affichage 10 agencé sous la dalle tactile capacitive 3, la source de lumière éclairant la première extrémité 7a du guide de lumière peut provenir de l'écran d'affichage 10.

Dans le cas notamment où la plaque frontale 32 est opaque, l'interface 1 peut comporter une source lumineuse, telle qu'une LED, située au niveau de la première extrémité 7a du guide de lumière. La LED est par exemple fixée sur la dalle tactile capacitive 3.

Le guide de lumière 7 est configuré pour réfléchir au moins une fois les rayons lumineux, par réflexion sur ses parois latérales ou sur des particules diffusantes du matériau du guide de lumière.

Le guide de lumière 7 ne peut pas transmettre des images provenant directement de l'écran 10. En effet, au contraire d'une simple vitre ou d'une lentille, le guide de lumière 7 homogénéise la lumière provenant de l'écran 10 grâce à une succession de réflexions de sorte qu'on ne puisse plus voir les pixels de l'écran 10 à travers le guide de lumière 7. L'écran 10 est ainsi en fait utilisé comme une simple source de lumière.

Le guide de lumière 7 est réalisé en matériau au moins partiellement transparent et/ou au moins partiellement translucide.

Le matériau est par exemple 100% transparent ou 90% transparent et 10% translucide, les proportions étant choisies selon l'effet souhaité. Dans le cas d'un matériau entièrement transparent, les réflexions peuvent avoir lieu sur les parois latérales uniquement. Pour augmenter le taux de réflexion, les parois latérales du guide de lumière 7 peuvent être polies. Dans le cas d'un matériau translucide, les réflexions peuvent avoir lieu sur des particules diffusantes internes au matériau.

Le guide de lumière 7 peut être réalisé en matériau plastique.

La surface de la deuxième extrémité 7b du guide de lumière 7 peut être translucide, par exemple dépolie. La surface translucide ou dépolie peut être obtenue par exemple par moulage ou par attaque chimique, pour obtenir par exemple de fines rugosités qui diffusent la lumière.

La hauteur du guide de lumière 7 peut être au moins deux fois, telle que au moins trois fois, supérieure à la surface de la première extrémité 7a du guide de lumière 7 située face à la dalle tactile capacitive 3. Ce critère géométrique permet d'augmenter le taux de réflexion des rayons lumineux sur les parois latérales et donc d'obtenir l'effet d'homogénéisation de la lumière du guide de lumière 7.

Le guide de lumière 7 peut présenter au moins une portion inclinée, tel qu'au moins une portion coudée. Le guide de lumière 7 représenté sur la figure 10 présente ainsi deux portions coudées. La portion inclinée permet de dévier les rayons lumineux et donc d'homogénéiser la lumière provenant de l'écran 10.

Le guide de lumière 7 peut présenter au moins une première portion cylindrique. La portion cylindrique peut être surmontée d'une deuxième portion de révolution de forme évasée (figures 3, 4 et 10).

Dans l'exemple de réalisation de la figure 3, le guide de lumière 7 présente une deuxième portion de révolution conique et une forme interne cylindrique. L'épaisseur du guide de lumière 7 présente ainsi une plus grande dimension du côté de l'extrémité visible de l'organe de commande 2. La surface de la deuxième extrémité 7b est plus grande que la surface de la première extrémité 7a.

Dans l'exemple de réalisation de la figure 10, le guide de lumière 7 présente une forme externe sensiblement en forme d'entonnoir et une épaisseur du guide de lumière 7 constante. La surface de la deuxième extrémité 7b présente la même dimension que la surface de la première extrémité 7a.

Le guide de lumière 7 peut entourer la partie centrale de préhension 4a. Les parties périphérique et centrale de préhension 4a, 4b et le guide de lumière 7 peuvent présenter des formes complémentaires. Les parties périphérique et centrale de préhension 4a, 4b sont fixées au guide de lumière 7, par exemple par collage. La partie périphérique de préhension 4a, la partie centrale de préhension 4b et le guide de lumière 7 de l'élément mobile de préhension 4 sont solidaires en rotation.

La première extrémité 7a et/ou la deuxième extrémité 7b du guide de lumière 7 présente par exemple une forme annulaire.

La deuxième extrémité 7b du guide de lumière 7 peut déboucher de l'organe de commande 2 pour être visible par l'utilisateur.

La deuxième extrémité 7b peut former un anneau lumineux ou « haloring » en anglais, visible à la surface de l'organe de commande 2.

Selon un autre exemple, la deuxième extrémité 7b forme un témoin lumineux, visible à la surface de l'organe de commande 2. La deuxième extrémité 7b présente ainsi par exemple une forme de pictogramme ou de symbole tel qu'une flèche ou présente une forme de disque ou une forme polygonale, telle qu'un rectangle.

Le témoin ou l'anneau lumineux permettent de signaler la position de l'organe de commande 2 à l'utilisateur, notamment pour la conduite de nuit.

Le surfaçage de la deuxième extrémité 7b visible par un utilisateur peut être nonplan. Il peut être défini par technologie « Freeform ». La surface de la deuxième extrémité 7b présente alors par exemple au moins une portion concave, notamment annulaire (figures 3 et 4). Une surface « freeform » peut ainsi présenter plusieurs rayons de courbure et/ou des concavités ayant des orientations différentes, ce qui permet entre autre de styliser l'organe de commande 2.

Selon un autre exemple de réalisation, la deuxième extrémité 7b est agencée en regard d'une zone d'affichage ménagée dans une face frontale opaque de l'organe de commande 2. La zone d'affichage est par exemple une zone translucide. La zone d'affichage définit au moins un pictogramme pouvant être rétroéclairé par la deuxième extrémité 7b du guide de lumière 7.

L'élément mobile de préhension 4 peut comporter un seul ou plusieurs guides de lumière 7. L'élément mobile de préhension 4 comporte par exemple plusieurs guides de lumière 7 indépendants s'inscrivant dans une forme tubulaire ou rétroéclairant un pictogramme respectif.

L'isolant électrique 7 peut en outre former le guide de lumière et inversement. Un seul élément référencé 7 désigne ainsi le guide de lumière et l'isolant électrique sur les figures 3, 5 et 10.

L'unité de traitement 12 peut être configurée pour modifier l'éclairage de l'écran d'affichage 10 ou de la source lumineuse en fonction d'un contact ou d'un déplacement de l'élément mobile de préhension 4 ou lorsqu'un appui, pouvant être associé à un contact de l'organe de commande 2, est détecté par le capteur d'appui 11.

L'écran 10 permet ainsi de disposer d'une grande palette de couleur et d'une grande souplesse de programmation pour rétroéclairer ou éclairer l'organe de commande 2. Les couleurs peuvent ainsi par exemple défiler de manière séquentielle, continue ou clignotante.

Le guide de lumière 7 permet ainsi de rétroéclairer ou éclairer l'organe de commande 2 par exemple en association avec la détection d'un contact de l'organe de commande 2 ou lorsque l'élément mobile de préhension 4 est déplacé ou lorsqu'un appui est détecté sur l'organe de commande 2.

Nous allons maintenant décrire pour illustration, deux exemples de fonctionnement de l'interface 1.

Selon un premier exemple de fonctionnement, l'utilisateur commence par toucher la partie périphérique de préhension 4a de l'organe de commande 2. Les charges électriques sont conduites par la surface métallique externe 9a de l'élément mobile de préhension 4 vers le premier index métallique 6a. La dalle tactile capacitive 3 détecte ces charges dans la zone de la dalle 3 où est agencé l'organe de commande 2 (étape 101, figure 5), ce qui permet d'en déduire un contact de l'organe de commande 2 par l'utilisateur.

L'utilisateur peut manipuler la partie périphérique de préhension 4b en rotation pour sélectionner une commande qui est affichée sur l'écran d'affichage 10. Plus précisément, les coordonnées du déplacement du premier index métallique 6a indiquent à l'unité de traitement 12 le positionnement angulaire de la partie périphérique de préhension 4b de l'organe de commande 2.

L'unité de traitement 12 peut modifier l'affichage sur l'écran d'affichage 10 en conséquence, notamment pour faire défiler les commandes par exemple de consigne de température de la climatisation autour de l'organe de commande 2 et par exemple pour produire un changement de couleur de l'écran 10 sous l'organe de commande 2. Egalement, l'unité de commande 12 peut commander une vibration de l'actionneur 13. L'utilisateur perçoit alors un retour lumineux et haptique.

Une fois la commande souhaitée sélectionnée, l'utilisateur appuie sur la partie périphérique de préhension 4a, pour valider la sélection. L'effort est transmis de la partie périphérique de préhension 4a à la dalle tactile capacitive 3, à travers le roulement 52 et le socle 51 du guide 5. L'effort provoque un léger déplacement de la dalle 3 imperceptible par l'utilisateur, qui est détecté par les capteurs d'appui 11.

Lorsque la mesure de force, successive au déplacement du premier index métallique 6a est supérieure à un seuil de détection, l'unité de traitement 12 commande une fonction, telle que la validation de la sélection (étape 102).

Selon un deuxième exemple de fonctionnement, l'unité de traitement 12 commande un affichage clignotant de l'écran 10 lorsqu'elle détecte un appel téléphonique entrant.

L'utilisateur touche la partie centrale de préhension 4b de l'organe de commande 2, pour prendre l'appel. Les charges électriques sont conduites par la surface métallique externe 9b de l'élément mobile de préhension 4 vers le deuxième index métallique 6b. La dalle tactile capacitive 3 détecte ces charges dans la zone où est agencé l'organe de commande 2. La dalle tactile capacitive 3 détecte ainsi un contact de l'organe de commande 2 (étape 101, figure 5).

L'utilisateur appuie ensuite sur la partie centrale de préhension 4b de l'organe de commande 2. Comme précédemment, l'effort est transmis de la partie centrale de préhension 4b sur la dalle tactile capacitive 3. Ce faible déplacement de la dalle 3 est détecté par les capteurs d'appui 11. Lorsque la mesure de force associée à la détection du deuxième index métallique 6b porté par la partie centrale de préhension 4b est supérieure à un seuil, l'unité de traitement 12 commande une fonction telle que la prise de l'appel (étape 102).

On comprend ainsi qu'une telle interface 1 permet de détecter un appui latéral ou un appui central sur l'organe de commande 2 en profitant des capteurs d'appui 11 associés à la dalle tactile capacitive 3.

De plus, l'interface 1 peut générer un retour visuel par exemple réalisé sous la forme d'un anneau lumineux rétroéclairé par l'écran d'affichage 10 qui peut être programmable en fonction de la manipulation de l'utilisateur.

Par ailleurs, l'interface 1 peut générer un retour vibratoire également programmable en fonction des manipulations de l'utilisateur, tel qu'en fonction de l'effort exercé sur l'organe de commande 2 ou en fonction de l'angle de rotation de la partie périphérique de préhension 4a.

On obtient ainsi une interface 1 dont le retour haptique ou visuel est complètement programmable en fonction du type de menu dans lequel l'utilisateur évolue.

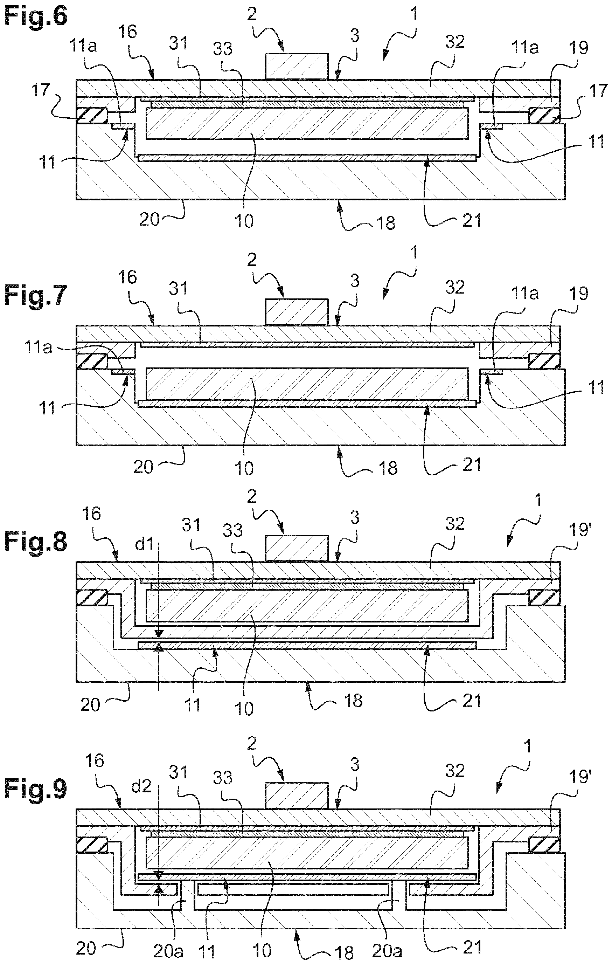

Les figures 6, 7, 8 et 9 sont des vues schématiques représentant différents agencements de l'interface 1.

La figure 6 montre un agencement similaire à celui représenté dans l'exemple précédent. En plus de pouvoir disposer les capteurs d'appui 11 au plus près des éléments amortisseurs 17, cette configuration permet que l'écran d'affichage 10 puisse être désolidarisé de la dalle tactile capacitive 3 et fixé à la partie fixe 18 comme représenté sur la figure 7.

Dans les modes de réalisation des figures 8 et 9, les capteurs d'appui 11 sont agencés à l'arrière de l'écran d'affichage 10. Cette configuration est intéressante car elle permet de disposer un ou plusieurs capteurs d'appui 11 sous toute la surface de l'écran 10.

Les capteurs d'appui 11 sont par exemple portés par la carte électronique 21 portant les circuits électroniques de gestion de l'écran d'affichage 10. On évite ainsi l'utilisation de cartes électroniques additionnelles pour les capteurs d'appui 11, ce qui facilite le montage de l'interface 1 et abaisse les coûts.

Comme on peut le voir sur l'exemple de la figure 8, le support 19' s'étend par exemple d'une extrémité à l'autre de l'écran 10, entre l'écran 10 et l'embase 20 portant la carte électronique 21, elle-même portant le capteur d'appui 11. Le capteur d'appui 11 est ainsi agencé entre l'embase 20 de la partie fixe 18 et le support 19' de la partie mobile 16.

Le capteur d'appui 11 peut ainsi mesurer une distance d1 du support 19' par rapport à l'embase 20 à l'arrière de l'écran 10. Un appui sur la dalle tactile capacitive 3 rapproche le capteur d'appui 11 porté par la carte électronique 21 du support 19' de la partie mobile 16. Avec cette configuration, la distance d1 diminue quand l'effort augmente.

Dans l'exemple de la figure 9, le support 19' s'étend par exemple d'une extrémité à l'autre de l'écran d'affichage 10, entre le capteur d'appui 11 porté par la carte électronique 21 et l'embase 20. Le capteur d'appui 11 peut être fixé à l'embase 20 par des plots 20a de l'embase 20 traversant le support 19'. Le capteur d'appui 11 est ainsi agencé en regard du support 19'. Le capteur d'appui 11 peut ainsi mesurer un déplacement d2 du support 19' par rapport à l'embase 20 à l'arrière de l'écran 10. Un appui sur la dalle tactile capacitive 3 éloigne le capteur d'appui 11 du support 19' de la partie mobile 16. Avec cette configuration, la distance d2 augmente quand l'effort augmente. En plus du coût réduit du fait de l'utilisation d'une seule carte électronique 21 commune pour l'écran 10 et les capteurs d'appui 11, cette configuration permet d'augmenter la précision de mesure notamment pour les faibles valeurs d'efforts. En effet, le capteur d'appui capacitif est plus précis lorsqu'il est situé proche de la cible, c'est-à-dire pour les distances d1, d2 faibles.

Dans les configurations décrites, les capteurs d'appui 11 sont agencés en périphérie de l'écran 10 et ne sont donc pas visibles par l'utilisateur.

Il est également possible d'utiliser des capteurs d'appui 11 transparents, comportant par exemple des électrodes en matériau ITO. Les capteurs d'appui 11 peuvent alors être agencés à l'arrière de la dalle 3, entre le capteur capacitif 31 et l'écran 10. Des entretoises transparentes peuvent permettre d'assurer un interstice d'air entre l'écran 10 et la dalle 3 pour permettre une détection capacitive du déplacement de la partie mobile 16.

Egalement, lorsque l'interface 1 est de type « TouchPad » par exemple et ne comporte pas d'écran, les capteurs d'appui 11 peuvent être agencés directement derrière le capteur capacitif 31, la plaque frontale 32 étant alors totalement opaque.

## Revendications

1. Interface (1) pour la commande d'au moins une fonction d'un organe de véhicule automobile, comportant :
- au moins un organe de commande (2) comprenant :
- un élément mobile de préhension (4), mobile en rotation autour d'un axe de rotation (I),
- au moins un index métallique (6a, 6b) porté par l'élément mobile de préhension (4) et mobile avec celui-ci,
- un guide (5), l'élément mobile de préhension (4) étant supporté et guidé en rotation par le guide (5) entouré par l'organe de préhension, et
- une dalle tactile capacitive (3) configurée d'une part pour détecter la position de l'index métallique (6a, 6b) et d'autre part pour saisir des informations de manière tactile, le guide (5) étant fixé sur la dalle tactile capacitive (3), l'index métallique (6a, 6b) étant agencé en regard de la dalle tactile capacitive (3),
**caractérisée en ce que** le guide (5) comporte un roulement mécanique (52) interposé entre un socle (51) du guide (5) et l'élément mobile de préhension (4), le roulement mécanique (52) étant un roulement à billes, un roulement à cylindre ou un roulement à aiguilles,
l'interface (1) comportant en outre au moins un capteur d'appui (11) configuré pour mesurer un paramètre représentatif d'une force d'appui exercée sur la dalle tactile capacitive (3), une partie fixe (18) et au moins un élément amortisseur (17) agencé entre la partie fixe (18) et une partie mobile (16) de l'interface (1) comprenant la dalle tactile capacitive (3), le capteur d'appui (11) étant un capteur capacitif configuré pour mesurer un déplacement de la partie mobile (16) par rapport à la partie fixe (18)

2. Interface (1) selon la revendication précédente, **caractérisée en ce que** le roulement mécanique (52) comporte un joint d'étanchéité.

3. Interface (1) selon l'une des revendications précédentes, **caractérisée en ce que** la dalle tactile capacitive (3) comporte une plaque frontale (32) sur laquelle est fixée le guide (5) de l'organe de commande (2) et un capteur capacitif fixé sous la plaque frontale (32), du côté opposé de la plaque frontale (32) fixé au guide (5).

4. Interface (1) selon la revendication précédente, **caractérisée en ce qu'**elle comporte au moins deux capteurs d'appui (11) agencés de part et d'autre du capteur capacitif (31) sous la plaque frontale (32), les capteurs d'appui (11) étant configurés pour mesurer un déplacement d'un support (19) de la partie mobile (16) portant la plaque frontale (32) par rapport à une embase (20) de la partie fixe (18).

5. Interface (1) selon l'une des revendications précédentes, **caractérisée en ce qu'**elle comporte un écran d'affichage (10) configuré pour afficher des informations associées à un contact, un déplacement ou un appui de la partie mobile de préhension (4) ou à un contact ou un appui sur la dalle tactile capacitive (3).

6. Interface (1) selon la revendication précédente, **caractérisée en ce que** l'écran d'affichage (10) est fixé à la dalle tactile capacitive (3), la dalle tactile capacitive (3) étant au moins partiellement transparente.

7. Interface (1) selon l'une des revendications précédentes, **caractérisée en ce qu'**elle comporte au moins actionneur vibratoire (13) configuré pour faire vibrer au moins la dalle tactile capacitive (3) en réponse à un contact, un déplacement ou un appui de l'élément mobile de préhension (4) ou à un contact ou un appui sur la dalle tactile capacitive (3).

8. Interface (1) selon l'une des revendications précédentes, **caractérisée en ce que** l'organe de commande (2) comporte au moins un organe élastique métallique (8a, 8b) dont une première extrémité est connectée à une surface métallique externe (9a, 9b) de l'élément mobile de préhension (4) et une deuxième extrémité est fixée à l'index métallique (6a, 6b), l'organe élastique métallique (8a, 8b) étant configuré pour solliciter l'index métallique (6a, 6b) contre la dalle tactile capacitive (3).

## Patentansprüche

1. Schnittstelle (1) zur Steuerung mindestens einer Funktion eines Kraftfahrzeugorgans, die aufweist:
- mindestens ein Steuerorgan (2), das enthält:
- ein um eine Drehachse (I) drehbewegliches bewegliches Greifelement (4),
- mindestens einen metallischen Index (6a, 6b), der vom beweglichen Greifelement (4) getragen wird und mit diesem beweglich ist,
- eine Führung (5), wobei das bewegliche Greifelement (4) von der vom Greiforgan umgebenen Führung (5) getragen und in Drehung geführt wird, und
- einen kapazitiven Berührungsbildschirm (3), der konfiguriert ist, einerseits die Position des metallischen Index (6a, 6b) zu erkennen und andererseits Informationen durch Berührung zu erfassen, wobei die Führung (5) auf dem kapazitiven Berührungsbildschirm (3) befestigt ist, wobei der metallische Index (6a, 6b) gegenüber dem kapazitiven Berührungsbildschirm (3) angeordnet ist,
**dadurch gekennzeichnet, dass** die Führung (5) ein mechanisches Lager (52) aufweist, das zwischen einem Sockel (51) der Führung (5) und dem beweglichen Greifelement (4) eingefügt ist, wobei das mechanische Lager (52) ein Kugellager, ein Zylinderlager oder ein Nadellager ist,
wobei die Schnittstelle (1) außerdem mindestens einen Auflagesensor (11), der konfiguriert ist, einen Parameter zu messen, der für eine auf den kapazitiven Berührungsbildschirm (3) ausgeübte Auflagekraft repräsentativ ist, einen ortsfesten Teil (18) und mindestens ein Dämpfungselement (17) aufweist, das zwischen dem ortsfesten Teil (18) und einem den kapazitiven Berührungsbildschirm (3) enthaltenden beweglichen Teil (16) der Schnittstelle (1) angeordnet ist, wobei der Auflagesensor (11) ein kapazitiver Sensor ist, der konfiguriert ist, eine Verschiebung des beweglichen Teils (16) bezüglich des ortsfesten Teils (18) zu messen.

2. Schnittstelle (1) nach dem vorhergehenden Anspruch, **dadurch gekennzeichnet, dass** das mechanische Lager (52) eine Dichtung aufweist.

3. Schnittstelle (1) nach einem der vorhergehenden Ansprüche, **dadurch gekennzeichnet, dass** der kapazitive Berührungsbildschirm (3) eine Frontplatte (32), auf der die Führung (5) des Steuerorgans (2) befestigt ist, und einen kapazitiven Sensor aufweist, der unter der Frontplatte (32) entgegengesetzt zur an der Führung (5) befestigten Seite der Frontplatte (32) befestigt ist.

4. Schnittstelle (1) nach dem vorhergehenden Anspruch, **dadurch gekennzeichnet, dass** sie mindestens zwei Auflagesensoren (11) aufweist, die zu beiden Seiten des kapazitiven Sensors (31) unter der Frontplatte (32) angeordnet sind, wobei die Auflagesensoren (11) konfiguriert sind, eine Verschiebung eines Trägers (19) des die Frontplatte (32) tragenden beweglichen Teils (16) bezüglich einer Grundplatte (20) des ortsfesten Teils (18) zu messen.

5. Schnittstelle (1) nach einem der vorhergehenden Ansprüche, **dadurch gekennzeichnet, dass** sie einen Anzeigebildschirm (10) aufweist, der konfiguriert ist, Informationen anzuzeigen, die einem Kontakt, einer Verschiebung oder einer Auflage des beweglichen Greifteils (4) oder einem Kontakt oder einer Auflage auf dem kapazitiven Berührungsbildschirm (3) zugeordnet sind.

6. Schnittstelle (1) nach dem vorhergehenden Anspruch, **dadurch gekennzeichnet, dass** der Anzeigebildschirm (10) am kapazitiven Berührungsbildschirm (3) befestigt ist, wobei der kapazitive Berührungsbildschirm (3) mindestens teilweise durchsichtig ist.

7. Schnittstelle (1) nach einem der vorhergehenden Ansprüche, **dadurch gekennzeichnet, dass** sie mindestens einen Vibrationsaktor (13) aufweist, der konfiguriert ist, mindestens den kapazitiven Berührungsbildschirm (3) als Reaktion auf einen Kontakt, eine Verschiebung oder eine Auflage des beweglichen Greifelements (4) oder auf einen Kontakt oder eine Auflage auf den kapazitiven Berührungsbildschirm (3) vibrieren zu lassen.

8. Schnittstelle (1) nach einem der vorhergehenden Ansprüche, **dadurch gekennzeichnet, dass** das Steuerorgan (2) mindestens ein elastisches metallisches Organ (8a, 8b) aufweist, von dem ein erstes Ende mit einer äußeren metallischen Fläche (9a, 9b) des beweglichen Greifelements (4) verbunden ist, und ein zweites Ende am metallischen Index (6a, 6b) befestigt ist, wobei das elastische metallische Organ (8a, 8b) konfiguriert ist, den metallischen Index (6a, 6b) gegen den kapazitiven Berührungsbildschirm (3) zu belasten.

## Claims

1. Interface (1) for controlling at least one function of a motor vehicle member, comprising:
- at least one control member (2) comprising:
- a movable gripping element (4) movable in rotation about an axis of rotation (I),
- at least one metal index (6a, 6b) borne by the movable gripping element (4) and movable therewith,
- a guide (5), the movable gripping element (4) being supported and guided in rotation by the guide (5) surrounded by the gripping member, and
- a capacitive touch pad (3) configured, on the one hand, to detect the position of the metal index (6a, 6b) and, on the other hand, to input information by touch, the guide (5) being fixed to the capacitive touch pad (3), the metal index (6a, 6b) being arranged facing the capacitive touch pad (3),
**characterized in that** the guide (5) comprises a mechanical rolling bearing (52) interposed between a base plate (51) of the guide (5) and the movable gripping element (4), the mechanical rolling bearing (52) being a ball bearing, a cylinder bearing or a needle bearing,
the interface (1) further comprising at least one pressure sensor (11) configured to measure a parameter representative of a pressure force exerted on the capacitive touch pad (3), a fixed part (18) and at least one damping element (17) arranged between the fixed part (18) and a movable part (16) of the interface (1) comprising the capacitive touch pad (3), the pressure sensor (11) being a capacitive sensor configured to measure a displacement of the movable part (16) with respect to the fixed part (18).

2. Interface (1) according to the preceding claim, **characterized in that** the mechanical rolling bearing (52) comprises a seal.

3. Interface (1) according to either of the preceding claims, **characterized in that** the capacitive touch pad (3) comprises a front-end plate (32) to which is fixed the guide (5) of the control member (2) and a capacitive sensor fixed under the front-end plate (32), on the side opposite the front-end plate (32) fixed to the guide (5).

4. Interface (1) according to the preceding claim, **characterized in that** it comprises at least two pressure sensors (11) arranged on either side of the capacitive sensor (31) under the front-end plate (32), the pressure sensors (11) being configured to measure a displacement of a support (19) of the movable part (16) bearing the front-end plate (32) with respect to a base (20) of the fixed part (18).

5. Interface (1) according to one of the preceding claims, **characterized in that** it comprises a display screen (10) configured to display information associated with a contact, a displacement or a press of the movable gripping part (4) or with a contact or a press on the capacitive touch pad (3).

6. Interface (1) according to the preceding claim, **characterized in that** the display screen (10) is fixed to the capacitive touch pad (3), the capacitive touch pad (3) being at least partially transparent.

7. Interface (1) according to one of the preceding claims, **characterized in that** it comprises at least one vibratory actuator (13) configured to make at least the capacitive touch pad (3) vibrate in response to a contact, a displacement or a press of the movable gripping element (4) or to a contact or a press on the capacitive touch pad (3).

8. Interface (1) according to one of the preceding claims, **characterized in that** the control member (2) comprises at least a metal elastic member (8a, 8b), a first end of which is connected to an outer metal surface (9a, 9b) of the movable gripping element (4) and a second end of which is fixed to the metal index (6a, 6b), the metal elastic member (8a, 8b) being configured to stress the metal index (6a, 6b) against the capacitive touch pad (3) .
